# EUROPÄISCHE PATENTSCHRIFT

(11) **EP 3 233 615 B1**
(45) Veröffentlichungstag und Bekanntmachung des Hinweises auf die Patenterteilung: **21.11.2018**
(21) Anmeldenummer: 15840988.8
(22) Anmeldetag: 15.12.2015
(51) Int. Cl.: B62H 5/14

(54) **DIEBSTAHLSCHUTZVORRICHTUNG FÜR EIN FAHRRAD**
ANTI-THEFT DEVICE FOR A BICYCLE
DISPOSITIF ANTIVOL DE CYCLE

(30) Priorität: 16.12.2014 DE 102014018476
(43) Veröffentlichungstag der Anmeldung: 25.10.2017
(73) Patentinhaber: Nextbike GmbH, 04109 Leipzig (DE)
(72) Erfinder: KALUPNER, Ralf, 04109 Leipzig (DE)
(74) Vertreter: Weihrauch, Frank
(86) Internationale Anmeldenummer: PCT/DE2015/000593
(87) Internationale Veröffentlichungsnummer: WO 2016/095890

(56) Entgegenhaltungen:
- DE-A1-102008 020 951
- DE-U1-202004 002 290

## Beschreibung

Die Erfindung betrifft eine Diebstahlschutzvorrichtung für ein Fahrrad, insbesondere zur Verwendung in einem Fahrradverleihsystem.
Zur Sicherung eines Fahrrades gegen Diebstahl sind aus dem Stand der Technik bereits unterschiedlichste Lösungsansätze bekannt.
Zumeist wird hierbei auf ein Ketten-, Draht- oder Bügelschloss zurückgegriffen, mittels dessen das Fahrrad mit einem ortsfesten Gegenstand verbunden und somit gesichert ist.
Ein Nachteil derartiger Fahrradschlösser liegt zum einen darin, dass diese stets vollständig von außen zugänglich sind und dadurch, je nach verwendetem Material, von einem Dieb mit geringem Aufwand zerstört und unwirksam gemacht werden können.
Zudem besteht ein weiterer Nachteil derartiger Fahrradschlösser darin, dass diese während des Nichtgebrauchs an dem Fahrrad selbst angebracht oder durch den Benutzer des Fahrrades separat, beispielsweise in einer Tasche oder in einem Rucksack mitgeführt werden müssen. In jedem Fall ergibt sich hierbei ein entsprechender Mehraufwand zur Aufbewahrung und Mitführung eines solchen Fahrradschlosses.
Des Weiteren sind aus dem Stand der Technik Fahrradschlösser bekannt, bei welchen der Diebstahlschutz durch einen Sicherungsbolzen bereitgestellt wird, welcher insbesondere im Hinterradbereich des Fahrrades angeordnet ist und im Verriegelungszustand den Speichenbereich des Hinterrades durchsetzt, sodass ein Blockieren des Hinterrades bewirkbar ist.
Die Nachteile derartiger Fahrradschlösser bestehen insbesondere darin, dass lediglich das Hinterrad des Fahrrades durch den Sicherungsbolzen blockiert wird und somit ausschließlich ein Diebstahl durch Wegfahren verhindert werden kann, und dass auch in diesem Fall sämtliche, die Sicherung bereitstellenden, Komponenten des Fahrradschlosses von Außen zugänglich sind.

Dokument DE 20 2004 002290 U1 offenbart die Präambel des Anspruchs 1.

Die Komponenten des Fahrradschlosses sind somit sowohl für einen Dieb erreichbar, als auch Witterungseinflüssen ausgesetzt.
Insbesondere bei einem Betrieb eines Fahrrades im Rahmen eines öffentlich zugänglichen Verleihsystems, sind die Komponenten des Fahrradschlosses meist einer steten Witterungseinwirkung ausgesetzt, wodurch unter Umständen entsprechende Funktionsstörungen, insbesondere der für die Verriegelung des Sicherungsbolzens zuständigen Komponenten, hervorgerufen werden können.

Die Aufgabe der Erfindung bildet es somit, unter Vermeidung der Nachteile des Standes der Technik, eine Diebstahlschutzvorrichtung für ein Fahrrad, insbesondere eines Fahrradverleihsystems, bereitzustellen, welche unterschiedliche Mittel der Freigabeauthentifizierung zulässt, einen hohen Widerstand gegen einen Diebstahlversuch bereitstellt und keines gesonderten Transport- und Aufbewahrungsaufwandes bedarf.

Die Aufgabe wird durch die im Patentanspruch 1 aufgeführten Merkmale gelöst. Bevorzugte Weiterbildungen ergeben sich aus den Unteransprüchen.

Eine erfindungsgemäße Diebstahlschutzvorrichtung für ein Fahrrad weist zum einen eine Gabeleinheit mit einem ersten Gabelholm und einem zweiten Gabelholm auf, wobei die Gabeleinheit an dem Fahrrad zugleich die übliche Funktion der Aufnahme des Vorderrades übernimmt.

Der erste Gabelholm weist erfindungsgemäß eine Durchsetzung auf, während der zweite Gabelholm eine Aufnahmeöffnung aufweist. Die Aufnahmeöffnung kann den zweiten Gabelholm hierbei nur teilweise oder auch vollständig durchsetzen.
Die Durchsetzung und die Aufnahmeöffnung sind vorliegend insbesondere auf einer gemeinsamen Mittelachse korrespondierend gegenüberliegend in den Gabelholmen angeordnet. Vorzugsweise befinden sich die Durchsetzung und die Aufnahmeöffnung auf gleicher Höhe. Je nach Anwendungsfall kann auch eine höhenversetzte Anordnung der Durchsetzung und der Aufnahmeöffnung vorgesehen sein kann.

Darüber hinaus weist die Diebstahlschutzvorrichtung erfindungsgemäß ein Sicherungselement auf, welches vorzugsweise als Sicherungsbolzen ausgebildet ist und welches vorliegend derart in der Gabeleinheit anordenbar ist, dass dieses den ersten Gabelholm im Bereich der Durchsetzung durchsetzt und in die Aufnahmeöffnung des zweiten Gabelholms eingreift.
Die Anordnung des Sicherungselements in der Gabeleinheit erfolgt hierbei vorteilhaft derart, dass das Sicherungselement einen Speichenbereich des Vorderrades des Fahrrades durchsetzt und auf diese Weise durch das Sicherungselement eine Blockierung des Vorderrades bereitstellbar ist.
Als Speichenbereich wird im vorliegenden Fall der Bereich des Vorderrades verstanden, in welchem die Speichen angeordnet sind und welcher an dessen Außenumfang durch die Felge begrenzt wird.
Das Sicherungselement weist erfindungsgemäß an seinem, in die Aufnahmeöffnung eingreifenden, ersten Ende eine Eingriffskontur auf. Die Eingriffskontur ist hierbei beispielsweise als umlaufende Nut oder als Bohrung ausgebildet.

Als weiteres Merkmal weist die erfindungsgemäße Diebstahlschutzvorrichtung eine Verriegelungseinheit auf, welche in dem zweiten Gabelholm angeordnet ist. Die Verriegelungseinheit ist erfindungsgemäß in einen Verriegelungszustand oder in einen Entriegelungszustand bringbar.

Die Verriegelungseinheit weist vorliegend einen elektromechanischen Antrieb sowie eine Verriegelungskontur auf, wobei die Verriegelungskontur mit dem elektromechanischen Antrieb verbunden ist. Die Verriegelungskontur greift in dem Verriegelungszustand in die Eingriffskontur des Sicherungselements ein.
Der Verriegelungszustand wird beispielsweise durch ein Federelement bewirkt, welches unter Vorspannung mit der Verriegelungskontur verbunden ist und im sich entspannenden Zustand die Verriegelungskontur in die Eingriffskontur schiebt. Alternativ kann der Verriegelungszustand auch allein durch die Gewichtskraft der Verriegelungskontur und ein dadurch erzieltes Einschieben der Verriegelungskontur in die Eingriffskontur ermöglicht werden.

Demgegenüber liegt in dem Entriegelungszustand gerade kein Eingriff der Verriegelungskontur in die Eingriffskontur vor.

Die Verriegelungseinheit und insbesondere deren elektromechanischer Antrieb sind des Weiteren erfindungsgemäß mit einer elektronischen Steuerungseinheit, nachfolgend auch nur als Steuerungseinheit bezeichnet, verbunden.
Die Steuerungseinheit ist hierbei vorzugsweise als Computer und insbesondere als Fahrradcomputer ausgebildet. Fahrradcomputer zur Benutzerauthentifizierung werden bei Fahrrädern von Fahrradverleihsystemen zunehmend vorgehalten.

In den Fahrradcomputer wird, beispielsweise via Touchscreen, ein entsprechender Befehl, der ein numerischer Code sein kann, zur Herstellung des Entriegelungszustandes eingegeben.
Dieser Befehl wird durch die Steuerungseinheit in ein Steuerungssignal umgewandelt, mittels dessen der elektromechanische Antrieb steuerbar ist.

Nach Erhalt und Verarbeitung des Steuerungssignals ist durch den elektromechanischen Antrieb der Entriegelungszustand der Verriegelungseinheit bereitstellbar, indem die Verriegelungskontur aus der Eingriffskontur des Sicherungselements herausgeführt wird. Der elektromotorische Antrieb kann hierzu beispielsweise als Spindeltrieb oder als Zugmagnet ausgebildet sein.

Die erfindungsgemäße Diebstahlschutzvorrichtung weist zum einen den technologischen Vorteil auf, dass die Verriegelungseinheit, und somit sämtliche für die Ver- und Entriegelung des Sicherungselements notwendigen Elemente, im Innern der Gabeleinheit angeordnet und somit vor äußeren Einwirkungen geschützt sind. Insbesondere einem Dieb wird somit der direkte Zugang zu der Verriegelungseinheit und somit deren Manipulation unmöglich gemacht, sodass ein Außerkraftsetzen der Verriegelungseinheit nur durch einen gewaltsamen Eingriff in Form einer teilweisen oder vollständigen Zerstörung des Gabelholms erfolgen kann. Ein solcher Eingriff führt jedoch zugleich dazu, dass die Betriebsfähigkeit des Fahrrades außer Kraft gesetzt und somit insbesondere ein schnelles Entfernen mit dem Fahrrad vom Diebstahlort verhinderbar ist.
Gegenüber herkömmlichen Vorrichtungen kann somit durch die Diebstahlschutzvorrichtung eine deutlich verbesserte Schutzwirkung erzielt werden.

Gleichzeitig ist die Verriegelungseinheit im Innern des Gabelholms ohne Zusatzmittel vor Witterungseinflüssen geschützt, was insbesondere eine deutlich längere Lebensdauer der Diebstahlschutzvorrichtung gegenüber herkömmlichen, außenliegenden Vorrichtung ermöglicht.

Ein weiterer Vorteil der erfindungsgemäßen Diebstahlschutzvorrichtung besteht in deren räumlichen Anordnung an dem Fahrrad im Gabelbereich.
Da diese Anordnung der üblichen Nutzungsweise des Fahrrades, insbesondere bei einem Einstellen in einen Fahrradständer, entspricht, kann somit eine besonders einfache und nutzerorientiere Handhabung der Diebstahlschutzvorrichtung bereitgestellt werden.

In einer besonders vorteilhaften Weiterbildung der Diebstahlschutzvorrichtung weist der zweite Gabelholm an dessen Außenseite einen Formkörper, beispielsweise in Form eines Pilzkopfes, mit einem Hintergreifungsbereich auf.
Die Außenseite des Gabelholms stellt hierbei dessen, dem ersten Gabelholm abgewandte Seite dar.

Der Formkörper ist erfindungsgemäß so ausgebildet, dass dieser in einen Kopplungszustand mit einem Kopplungselement eines Fahrradständers bringbar ist. In diesem Zusammenhang werden das Kopplungselement sowie der Fahrradständer vorliegend nicht als Bestandteil der Erfindung angesehen.

In dem Kopplungszustand hintergreift der Hintergreifungsbereich des Formkörpers einen Hinterschneidungsbereich des Kopplungselements, welches hierfür beispielsweise einen Querschnitt in Form einer T-Nut aufweist und in welches der Formkörper, während einer Platzierung des Fahrrades in dem Fahrradständer, eingeschoben wird.

Gleichzeitig ist in dieser Weiterbildung der Erfindung das Sicherungselement derart ausgebildet, dass dieses in dem Verriegelungszustand sowohl die Aufnahmeöffnung des Gabelholms als auch den Formkörper durchsetzt.
Der Formkörper weist in diesem Fall eine Durchsetzungsöffnung, beispielsweise in Form einer Durchgangsbohrung, auf.
Insbesondere ist das Sicherungselement vorliegend so ausgebildet, dass dieses in dem Kopplungszustand zwischen Formkörper und Kopplungselement in einen Eingriffszustand mit einer Halteöffnung des Kopplungselements bringbar ist.
Die Halteöffnung des Kopplungselements ist in diesem Fall beispielsweise als Sackloch ausgebildet und ermöglicht durch eine abschnittsweise Umfassung des Sicherungselements einen Formschluss in Querrichtung zu einer Mittenachse des Sicherungselements.
Durch diesen Formschluss wird in dem Eingriffszustand des Sicherungselements der Kopplungszustand zwischen Formkörper und Kopplungselement derart gesichert, dass zum einen eine Bewegung in Längsrichtung des Vorderrades durch den Formschluss und zum anderen eine Bewegung in Querrichtung des Vorderrades durch die Hintergreifung des Hinterschneidungsabschnitts durch den Hintergreifungsbereich unterbunden wird.

Auf diese Weise kann als besonderer Vorteil gleichzeitig mit dem Bereitstellen des Diebstahlschutzes im Verriegelungszustand der Diebstahlschutzvorrichtung eine sichere Aufnahme des Fahrrades in einem entsprechend dafür vorgesehenen Fahrradständer bereitgestellt werden.

Es ist dem Fachmann ersichtlich, dass der Formkörper und das Kopplungselment aufeinander abgestimmt sein müssen. Dies ist insbesondere bei einem Fahrradverleihsystem der Fall.

Insbesondere wird mit der vorliegenden Weiterbildung als besonderer Vorteil mit nur einem Mittel und nur einem Arbeitsschritt sowohl eine Blockierung des Vorderrades, als auch eine Verbindung mit einer ortsfesten Struktur bewirkt.

Als weiterer Vorteil wird eine besonders unkomplizierte Integration der erfindungsgemäßen Diebstahlschutzvorrichtung in ein Fahrradverleihsystem ermöglicht, so dass die ortsfeste Struktur dann durch Systemfahrradständer verfügbar ist.

Ferner kann als weiterer Vorteil in einer Weiterbildung in der Halteöffnung ein Geber, beispielsweise ein Endlagenschalter, vorgesehen sein, so dass ein Belegungszustand des Systemfahradständers auswertbar ist oder dass ein ordnungsgemäßer Eingriff in die Halteöffnung für den Benutzer signalisierbar ist.

Darüber hinaus sieht eine bevorzugte Variante der Diebstahlschutzvorrichtung vor, dass dem Sicherungselement ein Strangelement, beispielsweise aus Panzerdraht, zugeordnet ist.
Das Strangelement ist hierbei an einem ersten Strangende mit dem Sicherungselement und an einem zweiten Strangende mit der Gabeleinheit verbunden. Insbesondere die Verbindung des Strangelements mit der Gabeleinheit kann hierbei derart ausgebildet sein, dass das Strangende einen Auszugsabschnitt aufweist, welcher aus der Gabeleinheit ausziehbar, beziehungsweise umgekehrt in die Gabeleinheit einschiebbar ist, sodass bei einem Nichtgebrauch des Sicherungselements das Strangelement soweit als notwendig in die Gabeleinheit eingeschoben werden kann. Im Anwendungsfall kann das Strangelement um eine ortsfeste Struktur, beispielsweise um einen Laternenmast, oder um Abschnitte eines handelsüblichen Fahrradständers geschlungen werden.

Der besondere Vorteil des Strangelements besteht vorliegend darin, dass ein zu sicherndes Fahrrad, neben dem Blockieren des Vorderrades bei Bereitstellung des Verriegelungszustandes durch die Diebstahlschutzvorrichtung, mittels des Strangelements an einer ortsfesten Struktur, beispielsweise an einem Laternenmast, oder an einem handelsüblichen Fahrradständer gesichert werden kann.

In einer alternativen Variante ist das Strangelement an seinem zweiten Strangende mit einem Hauptrahmen des Fahrrades verbunden, wobei der Hauptrahmen in diesem Fall nicht Bestandteil der Erfindung ist.
Die Verbindung des Strangelements mit dem Hauptrahmen kann vorliegend ebenfalls derart ausgebildet sein, dass das Strangelement einen Auszugsabschnitt aufweist, welcher aus dem Hauptrahmen ausziehbar, beziehungsweise in diesen einschiebbar ist.

Neben der, bereits zum Anspruch 3 beschriebenen, vorteilhaften zweifachen Sicherung des Fahrrades durch Festlegung an einer ortsfesten Struktur und Blockierung des Vorderrades, bietet die vorliegende Variante den besonderen Vorteil, dass auch die Gabeleinheit in dem Verriegelungszustand der Diebstahlschutzvorrichtung, durch die mittelbare Verbindung mit dem Hauptrahmen über das Strangelement, zusätzlich gegen eine unerwünschte Demontage im Falle eines Diebstahlversuchs gesichert ist.

Bei einer Weiterbildung, welche die Merkmale des Anspruchs 2 und 4 kombiniert, ist zudem als besonderer Vorteil eine ortsfeste Sicherung auch des Hauptrahmens bei einem Einstellen in einen Systemfahrradständer erreichbar, da die Gabeleinheit über den Formkörper und das Sicherungselement, sowie mittelbar der Hauptrahmen über des Sicherungselement und das Strangelement, mit dem Systemfahrradständer als ortsfeste Strukur verbindbar sind.

In einer weiteren vorteilhaften Ausbildung ist der Gabeleinheit eine Haltevorrichtung zur Aufnahme des Sicherungselements zugeordnet.

Die Haltevorrichtung ist beispielsweise als Klemmelement ausgebildet und ermöglicht vorliegend insbesondere eine sichere Aufnahme und Fixierung des Sicherungselements während dessen Nichtgebrauch.
In diesem Zusammenhang kann die Haltevorrichtung sowohl direkt an der Gabeleinheit oder im Bereich des Hauptrahmens des Fahrrades angeordnet sein.

Eine bevorzugte Weiterbildung der Diebstahlschutzvorrichtung sieht ferner vor, dass die Verriegelungseinheit und die Steuerungseinheit durch eine drahtlose oder drahtgebundene Verbindung miteinander verbunden sind und dass über die Verbindung eine Zustandsinformation betreffend den Verriegelungszustand oder den Entriegelungszustand von der Verriegelungseinheit an die Steuerungseinheit übertragbar ist.

Die übertragene Zustandsinformation kann durch die Steuerungseinheit insbesondere visualisiert werden, sodass ein Benutzer des Fahrrades auf diese Weise über den aktuellen Betriebszustand der Diebstahlschutzvorrichtung sowie über das korrekte-Einstellen des Verriegelungs- beziehungsweise des Entriegelungszustandes informiert werden kann.

Bei der Verbindung zwischen Verriegelungseinheit und Steuerungseinheit handelt es sich vorzugsweise um die gleiche Verbindung, über welche die Steuerungseinheit mit dem elektromechanischen Antrieb der Verriegelungseinheit verbunden ist und über welche das jeweilige Steuerungssignal zur Bereitstellung des Entriegelungszustandes übertragen wird.

Des Weiteren weist die elektronische Steuerungseinheit der erfindungsgemäßen Diebstahlschutzvorrichtung in einer vorteilhaften Variante Mittel für eine drahtlose Datenübertragung auf, wobei die Mittel zur drahtlosen Datenübertragung nachfolgend auch verkürzt als Übertragungsmittel bezeichnet werden.

Die Übertragungsmittel ermöglichen vorliegend besonders vorteilhaft eine drahtlose Verbindung der Steuerungseinheit mit einer zentralen Dateneinheit, welche beispielsweise als Terminal oder als dezentrale Datenbank eines Fahrradverleihsystems ausgebildet ist. Die zentrale Dateneinheit ist hierbei nicht Bestandteil der Erfindung.

Durch die Übertragungsmittel kann in diesem Zusammenhang beispielsweise die obenstehend zu Anspruch 6 aufgeführte Zustandsinformation über den Ver- oder Entriegelungszustand von der Steuerungseinheit an die zentrale Dateneinheit übertragen und in dieser abgespeichert werden.
Insbesondere bei einer Ausbildung der zentralen Dateneinheit als dezentrale Datenbank eines Fahrradverleihsystems, kann somit die entsprechende Zustandsinformation an den jeweiligen Betreiber des Fahrradverleihsystems übermittelt werden, sodass dieser stets über den Status der zugehörigen Diebstahlschutzvorrichtung informiert werden kann.

Zudem kann durch die Übertragungsmittel, insbesondere bei einer Ausbildung der zentralen Dateneinheit als Terminal eines Fahrradverleihsystems, ein entsprechender Steuerungsbefehl zur Bereitstellung des Entriegelungszustandes der Diebstahlschutzvorrichtung direkt an dem Terminal eingegeben und von dort an die Steuerungseinheit übertragen werden. Auf diese Weise kann in einem solchen Fahrradverleihsystem der Prozess des Entriegelns der Diebstahlschutzvorrichtung optimiert und benutzerfreundlich gestaltet werden.

Die erfindungsgemäße Diebstahlschutzvorrichtung wird in Ausführungsbeispielen anhand von
- Fig. 1: Schematische Schnittdarstellung Basisausführung
- Fig. 2: Schematische Schnittdarstellung mit Formkörper
- Fig. 3: Schematische Schnittdarstellung mit Strangelement
- Fig. 4: Schematische Schnittdarstellung im deaktivierten Zustand näher erläutert.

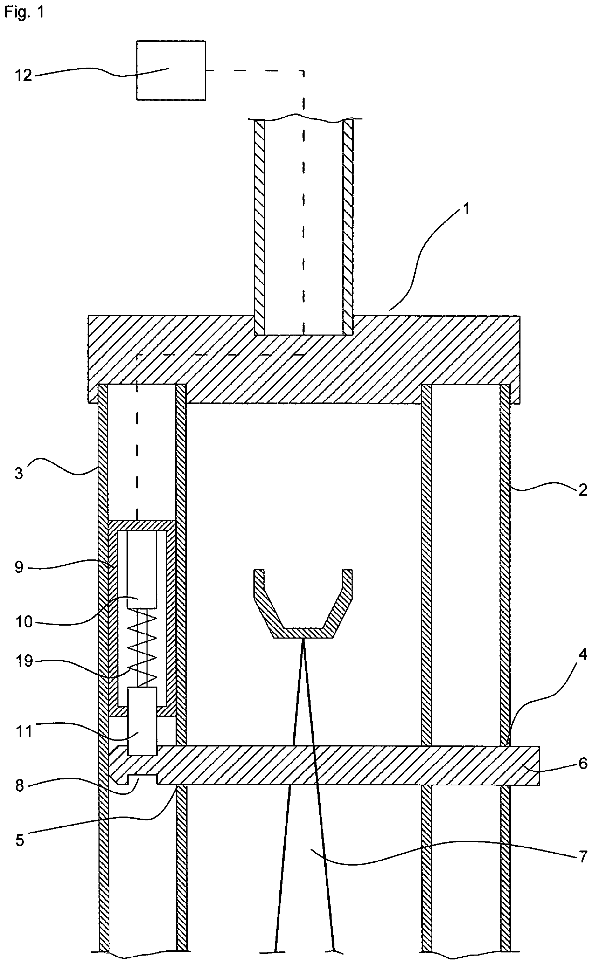

Fig. 1 zeigt ein Ausführungsbeispiel der Diebstahlschutzvorrichtung für ein Fahrrad in einer Basisausführung.

Die Diebstahlschutzvorrichtung weist vorliegend eine Gabeleinheit 1 mit einem ersten Gabelholm 2 und einem zweiten Gabelholm 3 auf, wobei der erste Gabelholm 2 eine Durchsetzung 4 und der zweite Gabelholm 3 eine Aufnahmeöffnung 5 aufweist.

Des Weiteren weist die Diebstahlschutzvorrichtung ein Sicherungselement 6 auf, welches vorliegend als Sicherungsbolzen ausgebildet und derart in der Gabeleinheit 1 anordenbar ist, dass dieses den ersten Gabelholm 2 im Bereich der Durchsetzung 4 durchsetzt und in die Aufnahmeöffnung 5 des zweiten Gebelholms 3 eingreift. Die Anordnung des Sicherungselements 7 erfolgt ferner derart, dass dieses einen Speichenbereich 7 eines Vorderrades (nur vereinfacht dargestellt) durchsetzt, wobei die Durchsetzung zwischen zwei Speichen des Speichenbereichs 7 erfolgt.

Das Sicherungselement 6 weist erfindungsgemäß eine Eingriffkontur 8 auf, welche vorliegend als umlaufende Ringnut ausgebildet ist und welche bei der in Fig. 1 dargestellten Anordnung des Sicherungselements 6 in dem zweiten Gabelholm 3 positioniert ist.
Die Eingriffskontur 8 ist hierbei so ausgebildet, dass eine Verriegelungskontur 11 in diese eingreifen kann.

Die Verriegelungskontur 11 ist, wie in Fig. 1 bis 3 dargestellt, Bestandteil der Verriegelungseinheit 9, welche in dem zweiten Gabelholm 3 angeordnet ist und welche ferner einen elektromechanischen Antrieb 10 aufweist.
Der elektromechanische Antrieb 10 ist vorliegend als Spindelelement ausgebildet und mit der Verriegelungskontur 11 verbunden.
Die Verriegelungseinheit 9 und insbesondere der elektromechanische Antrieb 10 sind in den vorliegenden Ausführungsbeispielen mit einer Steuerungseinheit 12 verbunden, welche beispielsweise als Fahrradcomputer ausgebildet ist.

Des Weiteren ist die Verriegelungseinheit 9 dazu in der Lage, einen Verriegelungszustand oder einen Entriegelungszustand einzunehmen.

Der Verriegelungszustand sieht hierbei vor, dass zwischen der Verriegelungskontur 11 und der Eingriffskontur 8 ein insbesondere formschlüssiger Eingriff bereitgestellt wird, wobei die Verriegelungskontur 11 vorliegend durch eine, mittels eines Federelements 19 bereitgestellte, Kraftbeaufschlagung in die Eingriffskontur 8 eingeschoben wird. Durch den Eingriff der Verriegelungskontur 11 in die Eingriffskontur 8 wird vorliegend ein Herausziehen des Sicherungselements 6 aus der Aufnahmeöffnung 5 und somit ein Unwirksammachen der Diebstahlschutzvorrichtung wirkungsvoll verhindert. Der Verriegelungszustand stellt hierbei den Zustand der Diebstahlschutzvorrichtung dar, in welchem diese aktiv ist und das Vorderrad des Fahrrades durch das Sicherungselement 6 wirksam blockiert wird.

Demgegenüber sieht der Entriegelungszustand der Verriegelungseinheit 9 vor, dass der Eingriff der Verriegelungskontur 11 in die Eingriffskontur 8 gelöst ist und somit das Sicherungselement 6 aus der Aufnahmeöffnung 5 herausgezogen und die Diebstahlschutzvorrichtung dadurch deaktiviert werden kann.
Der Entriegelungszustand wird in diesem Zusammenhang mittels des elektromechanischen Antriebs 10 bereitgestellt, welcher, nach Erhalt eines entsprechenden Steuerungsbefehls von der Steuerungseinheit 12, die Verriegelungskontur 11 aus der Eingriffskontur 8 herauszieht und somit den formschlüssigen Eingriff löst. Der Steuerungsbefehl wird vorliegend durch Eingabe eines entsprechenden Freischaltcodes in die Steuerungseinheit 12 ausgelöst.

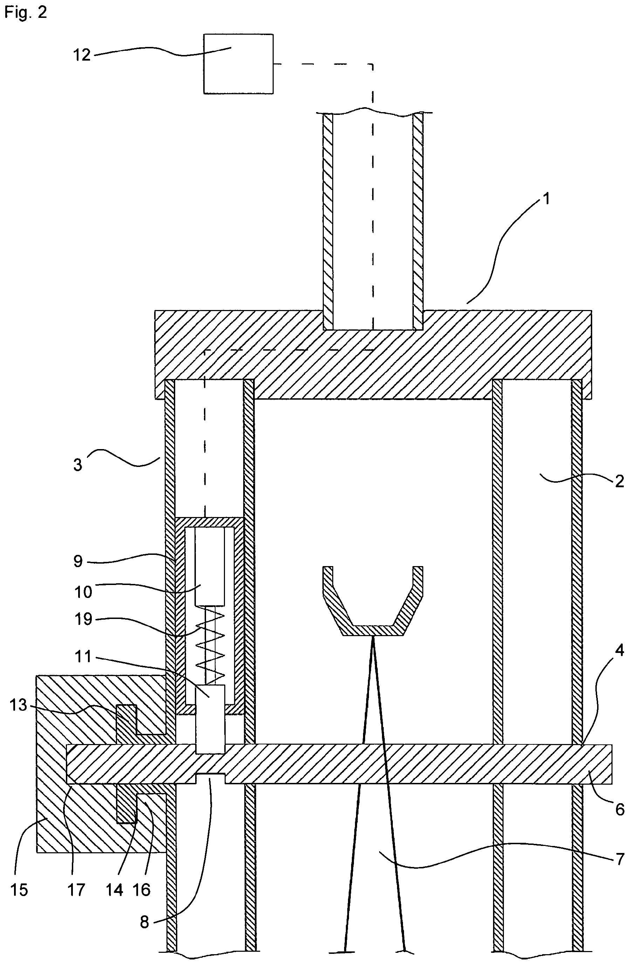

Ein weiteres Ausführungsbeispiel der Diebstahlschutzvorrichtung ist in Fig. 2 dargestellt.
Hierbei weist der zweite Gabelholm 3 einen Formkörper 13 auf, welcher vorliegend als Pilzkopf ausgebildet ist und welcher einen Hintergreifungsbereich 14 aufweist. Mittels des Formkörpers 13 ist die Gabeleinheit 1 der Diebstahlschutzvorrichtung in einem Kopplungselement 15 eines Fahrradständers (nicht dargestellt) aufnehmbar. Die Aufnahme erfolgt hierbei derart, dass die Gabeleinheit 1 mit dem Formkörper 13 bis zum Erreichen einer definierten Endlage, beispielsweise bereitgestellt durch einen Endanschlag, horizontal in das Kopplungselement 15 eingeschoben wird, wobei der Hintergreifungsbereich 14 des Formkörpers 13 einen Hinterschneidungsabschnitt 16 des Kopplungselements 15 hintergreift und so in Richtung einer Mittenachse des Sicherungselements 6 ein Formschluss zwischen Formkörper 13 und Kopplungselement 15 bereitstellbar ist.

Darüber hinaus ist in dem Ausführungsbeispiel gemäß Fig. 2 das Sicherungselement 6 derart ausgebildet, dass dieses, insbesondere in dem Verriegelungszustand, den zweiten Gabelholm 3 und den Formkörper 13 durchsetzt und in eine Halteöffnung 17 des Kopplungselements 15 eingreift. Die Halteöffnung 17 ist vorliegend als Sackloch und insbesondere derart ausgebildet, dass in deren Bereich das Sicherungselement 6 an dessen Außenumfang zumindest abschnittsweise durch das Kopplungselement 15 umschlossen und auf diese Weise quer zur Mittenachse des Sicherungselements 6 ein Formschluss zwischen dem Sicherungselement 6 und dem Kopplungselement 15 bereitgestellt wird.

Die Diebstahlschutzvorrichtung ermöglicht in dem vorliegend beschriebenen Ausführungsbeispiel als besonderer Vorteil, neben der bereitstellbaren Blockierung des Vorderrades des Fahrrades, eine sichere Aufnahme des Fahrrades in einem dafür vorgesehenen Fahrradständer, wobei bei einer solchen Aufnahme in dem Fahrradständer ein seitliches Herausziehen der Gabeleinheit 1 aus dem Fahrradständer durch den Formschluss zwischen Formkörper 13 und Kopplungselement 15 und ein Herausziehen der Gabeleinheit 1 in Längsrichtung des Fahrrades aus dem Fahrradständer durch den Formschluss zwischen Sicherungselement 6 und Kopplungselement 15 verhinderbar sind.

Die hier beschriebene Ausführungsform der Diebstahlschutzvorrichtung eignet sich insbesondere für Fahrräder, welche im Rahmen eines Fahrradverleihsystems mit Systemfahrradständern an verschiedenen Orten wie Bahnhöfen oder zentralen Plätzen verwendet werden.

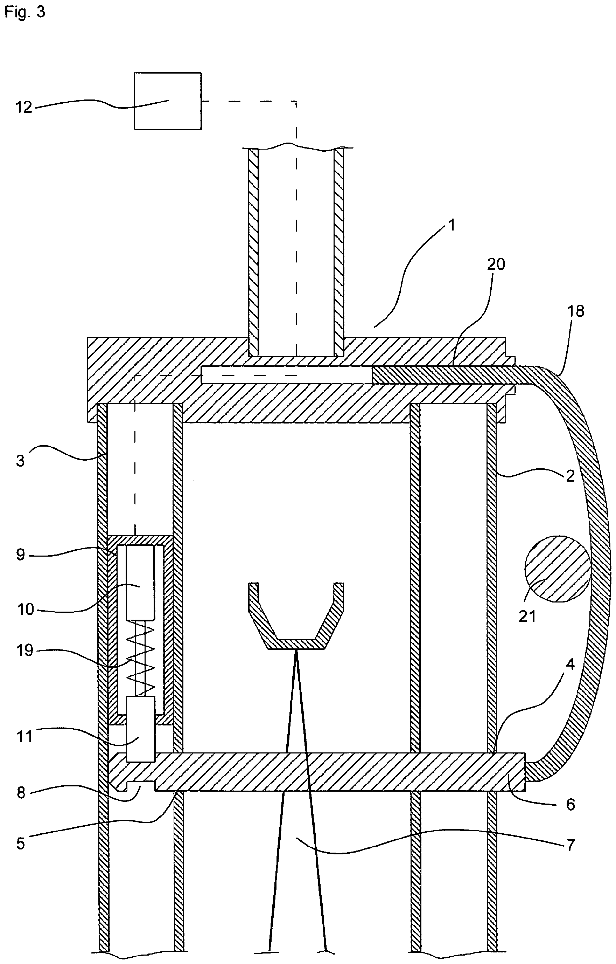

Fig. 3 zeigt ein weiteres Ausführungsbeispiel der erfindungsgemäßen Diebstahlschutzvorrichtung.

Hierbei ist dem Sicherungselement 6 zusätzlich ein Strangelement 18 zugeordnet, welches vorliegend aus Panzerdraht besteht und welches an einem ersten Strangende mit dem Sicherungselement 6 und an einem zweiten Strangende mit der Gabeleinheit 1 verbunden ist.
Im Bereich der Verbindung mit der Gabeleinheit 1 weist das Strangelement 18 vorliegend einen Auszugsabschnitt 20 auf, welcher aus der Gabeleinheit 1 herausziehbar, beziehungsweise in diese einschiebbar ist, wobei ein vollständiges Herausziehen des Strangelements 18 aus der Gabeleinheit 1 durch ein entsprechendes Anschlagmittel (nicht dargestellt) unterbunden wird.

Das Strangelement 18 ermöglicht als besonderen Vorteil zum einen eine zusätzliche Sicherung der Gabeleinheit 1, beziehungsweise des Fahrrades an einer ortsfesten Struktur 21, beispielsweise einem Fahrradständer, wobei das Strangelement 18 vor dem Einschieben des Sicherungselements 6 in die Durchsetzung des ersten Gabelholms 2 um die ortsfeste Struktur herumgelegt und diese somit zwischen Gabeleinheit 1 und Strangelement 18 eingeschlossen wird.
Zum anderen ermöglicht das Strangelement 18 eine zusätzliche Sicherung des Sicherungselements 6 gegen Verlust bei Nichtgebrauch der Diebstahlschutzvorrichtung. Insbesondere durch den Auszugsabschnitt 20 wird es hierbei ermöglicht, dass das Strangelement 18 soweit in die Gabeleinheit 1 einschiebbar ist, dass während der Verwendung des Fahrrades ein unerwünschtes Hängenbleiben mit dem Strangelement 18 an weiteren, ortsfesten Strukturen oder ein unerwünschter Eingriff des Strangelements 18 in den Speichenbereich 7 ausgeschlossen werden können.

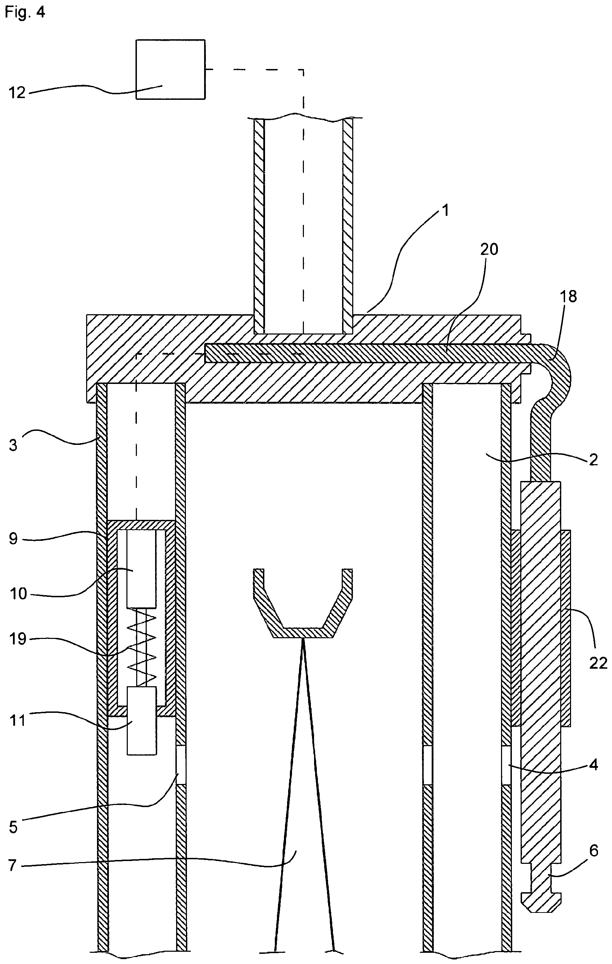

Ergänzend zeigt Fig. 4 ein weiteres Ausführungsbeispiel der Diebstahlschutzvorrichtung in einem deaktivierten Zustand, beispielsweise während einer Nutzung des zugehörigen Fahrrades.
Der Gabeleinheit 1 ist, wie aus Fig. 4 zu entnehmen, eine Haltevorrichtung 22 zugeordnet, welche vorliegend als Klemmelement aus Kunststoff ausgebildet ist und in welcher das Sicherungselement 6 während des deaktivierten Zustandes der Diebstahlschutzvorrichtung aufnehmbar ist.

Wie Fig. 4 ebenfalls veranschaulicht, ist in dem deaktivierten Zustand der Diebstahlschutzvorrichtung das Strangelement 20 soweit als notwendig in die Gabeleinheit 1 eingeschoben.

### Verwendete Bezugszeichen

- 1: Gabeleinheit
- 2: erster Gabelholm
- 3: zweiter Gabelholm
- 4: Durchsetzung
- 5: Aufnahmeöffnung
- 6: Sicherungselement
- 7: Speichenbereich
- 8: Eingriffskontur
- 9: Verriegelungseinheit
- 10: elektromechanischer Antrieb
- 11: Verriegelungskontur
- 12: Steuerungseinheit
- 13: Formkörper
- 14: Hintergreifungsbereich
- 15: Kopplungselement
- 16: Hinterschneidungsabschnitt
- 17: Halteöffnung
- 18: Strangelement
- 19: Federelement
- 20: Auszugsabschnitt
- 21: ortsfeste Struktur
- 22: Haltevorrichtung

## Patentansprüche

1. Diebstahlschutzvorrichtung für ein Fahrrad,
aufweisend eine Gabeleinheit (1) mit einem ersten Gabelholm (2) und einem zweiten Gabelholm (3), wobei der erste Gabelholm (2) eine Durchsetzung (4) aufweist und wobei der zweite Gabelholm (3) eine Aufnahmeöffnung (5) aufweist, und aufweisend ein Sicherungselement (6), welches derart in der Gabeleinheit (1) anordenbar ist, dass dieses den ersten Gabelholm (2) im Bereich der Durchsetzung (4) durchsetzt und in die Aufnahmeöffnung (5) des zweiten Gabelholms (3) eingreift, wobei mit dem Sicherungselement (6) ein Speichenbereich (7) eines Vorderrades des Fahrrades durchsetzbar ist und wobei das Sicherungselement (6) an einem, in die Aufnahmeöffnung (5) eingreifenden, ersten Ende eine Eingriffskontur (8) aufweist, **dadurch gekennzeichnet, dass** die Diebstahlschutzvorrichtung eine Verriegelungseinheit (9) aufweist, welche in dem zweiten Gabelholm (3) angeordnet ist und welche einen elektromechanischen Antrieb (10) aufweist, wobei die Verriegelungseinheit (9) in einen Verriegelungszustand oder in einen Entriegelungszustand bringbar ist und wobei die Verriegelungseinheit (9) eine Verriegelungskontur (11) aufweist, welche mit dem elektromechanischen Antrieb (10) verbunden ist, und wobei in dem Verriegelungszustand die Verriegelungskontur (11) in die Eingriffskontur (8) eingreift und wobei in dem Entriegelungszustand der Eingriff der Verriegelungskontur (11) in die Eingriffskontur (8) gelöst ist, sowie aufweisend eine elektronische Steuerungseinheit (12), welche mit dem elektromechanischen Antrieb (10) verbunden ist, wobei mit der elektronischen Steuerungseinheit (12) der elektromechanische Antrieb (10) steuerbar ist und wobei durch den elektromechanischen Antrieb (10) der Entriegelungszustand bereitstellbar ist.

2. Diebstahlschutzvorrichtung nach Anspruch 1,
wobei der zweite Gabelholm (3) an dessen Außenseite einen Formkörper (13) mit einem Hintergreifungsbereich (14) aufweist, wobei der Formkörper (13) derart ausgebildet ist, dass dieser in einen Kopplungszustand mit einem Kopplungselement (15) eines Fahrradständers bringbar ist und wobei in dem Kopplungszustand der Hintergreifungsbereich (14) einen Hinterschneidungsabschnitt (16) des Kopplungselements (15) hintergreift, und wobei das Sicherungselement (6) derart ausgebildet ist, dass dieses in dem Verriegelungszustand die Aufnahmeöffnung (5) des zweiten Gabelholms (3) und den Formkörper (13) durchsetzt und dass dieses in dem Kopplungszustand in einen Eingriffszustand mit einer Halteöffnung (17) des Kopplungselements (15) bringbar ist, wobei durch den Eingriffszustand der Kopplungszustand gesichert ist.

3. Diebstahlschutzvorrichtung nach Anspruch 1 oder 2,
wobei dem Sicherungselement (6) ein Strangelement (18) zugeordnet ist, welches an einem ersten Strangende mit dem Sicherungselement (6) verbunden ist und welches an einem zweiten Strangende mit der Gabeleinheit (1) verbunden ist.

4. Diebstahlschutzvorrichtung nach Anspruch 1 oder 2,
wobei dem Sicherungselement (6) ein Strangelement (18) zugeordnet ist, welches an einem ersten Strangende mit dem Sicherungselement (6) verbunden ist und welches an einem zweiten Strangende mit einem Hauptrahmen des Fahrrades verbindbar ist.

5. Diebstahlschutzvorrichtung nach einem der vorhergehenden Ansprüche,
wobei der Gabeleinheit (1) eine Haltevorrichtung (22) zur Aufnahme des Sicherungselements (6) zugeordnet ist.

6. Diebstahlschutzvorrichtung nach einem der vorhergehenden Ansprüche,
wobei über eine Verbindung zwischen der Verriegelungseinheit (9) und der elektronischen Steuerungseinheit (12) eine Zustandsinformation über den Verriegelungszustand oder über den Entriegelungszustand von der Verriegelungseinheit (9) an die elektronische Steuerungseinheit (12) übertragbar ist.

7. Diebstahlschutzvorrichtung nach einem der vorhergehenden Ansprüche,
wobei die elektronische Steuerungseinheit (12) Mittel für eine drahtlose Datenübertragung aufweist.

## Claims

1. An anti-theft device for a bicycle,
comprising a fork unit (1) having a first fork bar (2) and a second fork bar (3), wherein the first fork bar (2) has a passage (4) and the second fork bar (3) has a receiving opening (5), and comprising a securing element (6) which can be arranged in the fork unit (1) in such a way that it passes through the first fork bar (2) in the region of the passage (4) and engages in the receiving opening (5) of the second fork bar (3), wherein the securing element (6) can be passed through a spoke region (7) of a front wheel of the bicycle, and wherein the securing element (6) has an engagement contour (8) at a first end engaged in the receiving opening (5), **characterized in that** the anti-theft device comprises a locking unit (9) which is arranged in the second fork bar (3) and which has an electromechanical drive (10), wherein the locking unit (9) can be brought to a locking state or to an unlocking state and wherein the locking unit (9) has a locking contour (11) which is connected to the electromechanical drive (10), and wherein the locking contour (11) engages in the engagement contour (8) in the locking state and wherein the engagement of the locking contour (11) in the engagement contour (8) is released in the unlocking state, and comprises an electronic control unit (12) which is connected to the electromechanical drive (10), wherein the electromechanical drive (10) can be controlled by means of the electronic control unit (12), and wherein the unlocking state can be provided by means of the electromechanical drive (10).

2. The anti-theft device according to claim 1,
wherein the second fork bar (3) is equipped on its outer side with a moulded body (13) having an engagement section (14), wherein the moulded body (13) is designed in such a manner that it can be brought to a coupling state to a coupling element (15) of a bicycle stand and wherein in the coupling state the engagement section (14) engages in an undercut section (16) of the coupling element (15), and wherein the security element (6) is designed such that it passes through the receiving opening (5) of the second fork bar (3) and the moulded body (13) in the locking state and that it can be brought into an engaged state with a supporting opening (17) of the coupling element (15) in the coupling state, wherein the coupling state is secured by the engaged state.

3. The anti-theft device according to claim 1 or 2,
wherein a strand element (18) is assigned to the securing element (6) and is connected to the securing element (6) at a first strand end and is connected to the fork unit (1) at a second strand end.

4. The anti-theft device according to claim 1 or 2,
wherein a strand element (18) is assigned to the securing element (6) and is connected to the securing element (6) at a first strand end and can be connected to a main frame of the bicycle at a second strand end.

5. The anti-theft device according to one of the previous claims,
wherein a holding unit (22) is assigned to the fork unit (1) for holding the securing element (6).

6. The anti-theft device according to one of the previous claims,
wherein a status information as to the locking state or the unlocking state of the locking unit (9) can be transmitted from the locking unit (9) to the electronic control unit (12) via a connection between the locking unit (9) and the electronic control unit (12).

7. The anti-theft device according to one of the previous claims,
wherein the electronic control unit (12) is provided with means for wireless data communication.

## Revendications

1. Dispositif antivol de cycle, comprenant une anse (1) pourvue d'un premier bras (2) et d'un deuxième bras (3), le premier bras (2) présentant un trou débouchant (4) et le deuxième bras (3) présentant un trou borgne (5) récepteur, et comprenant un élément de sécurité (6) apte à être disposé dans l'unité anse (1) de manière à traverser le premier bras (2) par le trou débouchant (4) et à venir en prise dans le trou borgne (5) récepteur du deuxième bras (3), l'élément de sécurité (6) étant apte à traverser une zone de rayons (7) d'une roue avant du cycle et l'élément de sécurité (6) présentant un contour de prise (8) à une première extrémité venant en prise dans le trou borgne (5) récepteur, est **caractérisé en ce que** le dispositif antivol de cycle présente une unité de verrouillage (9) qui est disposée dans le deuxième bras (3) et qui présente un mécanisme d'entraînement électromécanique (10), l'unité de verrouillage (9) pouvant être amenée en mode de verrouillage ou en mode de déverrouillage, et l'unité de verrouillage (9) présentant un contour de verrouillage (11) qui est relié au mécanisme d'entraînement électromécanique (10) et qui, en mode de verrouillage, entre en prise dans le contour de prise (8) et, en mode de déverrouillage, le contour de verrouillage (11) se désolidarise du contour de prise (8), et enfin comprenant une unité de commande électronique (12) qui est reliée à l'entraînement électromécanique (10), le mécanisme d'entraînement électromécanique (10) pouvant être commandé par l'unité de commande électronique (12) et l'entraînement électromécanique (10) permettant d'obtenir le mode de déverrouillage.

2. Dispositif antivol de cycle suivant la revendication 1,
le deuxième bras (3) étant muni d'un corps moulé (13) avec une zone pour venir en prise derrière (14) sur sa face extérieure et le corps moulé (13) étant formé tellement qu'il peut être amené dans un état de couplage au moyen d'un élément de couplage (15) d'un support pour vélos et - en état de couplage - la zone pour venir en prise derrière (14) venant en prise derrière dans une section de contre-dépouille (16) de l'élément de couplage (15) et l'élément de sécurité (6) étant formé tellement qu'il traverse en mode de verrouillage le trou borgne (5) du deuxième bras (3) et le corps moulé (13) et qu'en état de couplage il peut être amené à un état engagé avec un trou de retenue (17) de l'élément de couplage (15), l'état de couplage étant sécurisé par l'état engagé.

3. Dispositif antivol de cycle suivant les revendications 1 ou 2, l'élément de sécurité (6) étant muni d'un élément filant (18) qui est relié à l'élément de sécurité (6) sur son premier bout de fil et qui peut être relié à l'anse (1) sur son deuxième bout de fil.

4. Dispositif antivol de cycle suivant les revendications 1 ou 2,
l'élément de sécurité (6) étant muni d'un élément filant (18) qui est relié à l'élément de sécurité (6) sur son premier bout de fil et qui peut être relié au cadre principal du cycle sur son deuxième bout de fil.

5. Dispositif antivol de cycle suivant une des revendications précédentes, l'anse (1) étant munie d'un dispositif de maintien (22) pour le logement de l'élément de sécurité (6).

6. Dispositif antivol de cycle suivant une des revendications précédentes, des informations d'état à l'égard du mode de verrouillage ou du mode de déverrouillage de l'unité de verrouillage (9) pouvant être transférées à l'unité de commande électronique (12) par la connexion entre l'unité de verrouillage (9) et l'unité de commande électronique (12).

7. Dispositif antivol de cycle suivant une des revendications précédentes, l'unité de commande électronique (12) étant munie des moyens pour le transfert de données sans fil.
